# EUROPÄISCHE PATENTSCHRIFT

(11) **EP 0 477 617 B1**
(45) Veröffentlichungstag und Bekanntmachung des Hinweises auf die Patenterteilung: **17.11.1994**
(21) Anmeldenummer: 91114987.0
(22) Anmeldetag: 05.09.1991
(51) Int. Cl.: A47C 3/30, F16B 21/18

(54) **Längenverstellbare Gasfeder und Hubvorrichtung mit einer solchen Gasfeder**
Lengthwise adjustable gas spring and lifting device with such a gas spring
Ressort à gaz de longeur réglable et dispositif de levage avec un tel ressort à gaz

(30) Priorität: 25.09.1990 DE 9013467 U
(43) Veröffentlichungstag der Anmeldung: 01.04.1992
(73) Patentinhaber: SUSPA COMPART Aktiengesellschaft, D-90518 Altdorf (DE)
(72) Erfinder: Wolf, Herbert, W-8500 Nürnberg 40 (DE); Gebhardt, Adolf, W-8501 Feucht (DE); Stadelmann, Ludwig, W-8503 Altdorf (DE)
(74) Vertreter: Rau, Manfred, Dr. Dipl.-Ing.

(56) Entgegenhaltungen:
- EP-A- 0 274 661
- US-A- 3 923 408
- US-A- 4 899 969

## Beschreibung

Die Erfindung betrifft eine längenverstellbare Gasfeder nach dem Oberbegriff des Anspruches 1 und eine Hubvorrichtung mit einer solchen Gasfeder nach dem Oberbegriff des Anspruches 5.

Derartige Gasfedern sind aus der DE-A-18 12 282 bekannt. Unter Verwendung solcher längenverstellbaren Gasfedern aufgebaute Hubvorrichtungen für Stühle, Tische und dgl. sind beispielsweise aus der DE-A-19 31 012 bekannt. Das Gehäuse der Gasfeder selber noch in ein zusätzliches Tragrohr einzuhüllen und dieses im Führungsrohr der Hubvorrichtung verschiebbar zu führen ist aus der EP-A-0 133 524 bekannt. Bei solchen Gasfedern tritt das bekannte Problem auf, daß die Kolbenstangen nicht absolut fluchtend zur Achse des Gehäuses bzw. des zusätzlichen Tragrohres verlaufen. Die üblicherweise in den führungsrohren angeordneten Führungsbüchsen können solche Fluchtungsfehler verstärken, so daß das freie Ende der Kolbenstange, das in einer Bodenplatte des Führungsrohres befestigt wird, eine deutlich erkennbare Abweichung von der Mittelachse des Führungsrohres aufweist, die an sich mit der Mittelachse der Gasfeder zusammenfallen soll. Diese Fluchtungsfehler führen dazu, daß sich das in der Bodenplatte des Führungsrohres gehaltene freie Ende der Kolbenstange bei Ein- und Ausfahrbewegungen der Gasfeder quer zur Bodenplatte bewegt. Die Scheiben des Axial-Wälzlagers verursachen hierbei knackende Geräusche, wenn dieses Wälzlager auf der Bodenplatte des Führungsrohres hin- und hergeschoben wird.

Der Erfindung liegt die Aufgabe zugrunde, die Gasfeder der gattungsgemäßen Art und die Hubvorrichtung der gattungsgemäßen Art so auszugestalten, daß derartige Geräusche zuverlässig vermieden werden und daß gleichzeitig der hierfür erforderliche Aufwand so gering wie möglich ist.

Diese Aufgabe wird für die Gasfeder der gattungsgemässen Art nach dem Kennzeichnungsteil des Anspruches 1 und für die Hubvorrichtung der gattungsgemäßen Art nach dem Kennzeichnungsteil des Anspruches 5 gelöst. Durch die erfindungsgemäßen Maßnahmen wird sichergestellt, daß die untere an der Bodenplatte anliegende Scheibe auch bei den geschilderten Seitenbewegungen des freien Endes der Kolbenstange keine Bewegungen gegenüber der Bodenplatte mehr ausführt, so daß die knackenden Geräusche unterbleiben. Durch die erfindungsgemäße Ausgestaltung, nämlich die Einschnürung an dem Abschnitt der Kolbenstange, wird erreicht, daß beide Scheiben des Axial-Wälzlagers identisch sein können, und insbesondere also auch identische Mittelöffnungen aufweisen. Es brauchen also insbesondere keine unterschiedlichen Scheiben eingesetzt zu werden, was erhebliche Lagerhaltungsprobleme aufwerfen würde, da die längenverstellbare Gasfeder sehr oft versandt wird, ohne daß das Axial-Wälzlager auf dem Abschnitt der Kolbenstange vormontiert ist. Die erfindungsgemäßen Maßnahmen weisen aber noch einen zusätzlichen Vorteil auf, weil sie gleichzeitig entsprechend den Ansprüchen 2 und 6 dazu verwendet werden können, ohne weitere zusätzliche Maßnahmen das Axial-Wälzlager auf dem Abschnitt der Kolbenstange vorzumontieren. Die Einzelheiten hierzu ergeben sich aus den Ansprüchen 3 und 4 bzw. 7 und 8.

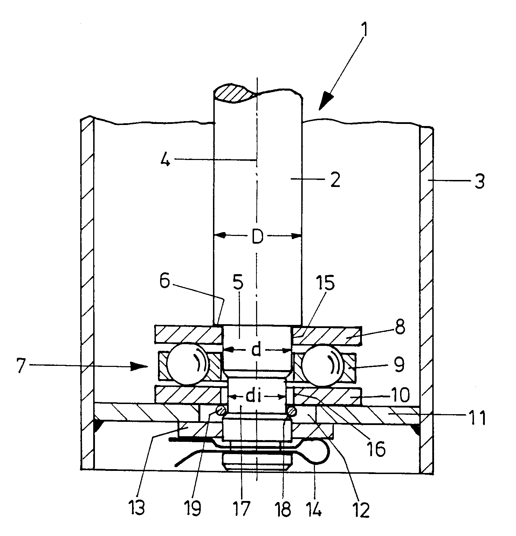

Weitere Merkmale, Vorteile und Einzelheiten der Erfindung ergeben sich aus der nachfolgenden Beschreibung eines Ausführungsbeispiels anhand der Zeichnung, die einen Teil einer Hubvorrichtung für Stühle, Tische od.dgl. im Längsschnitt zeigt.

Von einer längenverstellbaren Gasfeder 1 ist nur eine Kolbenstange 2 dargestellt. Derartige längenverstellbare Gasfedern sind allgemein bekannt, beispielsweise aus der DE-A-18 12 282. Diese längenverstellbare Gasfeder 1 ist mit ihrem nicht dargestellten Gehäuse in einem Führungsrohr 3 in Richtung der gemeinsamen Mittel-Längs-Achse 4 verschiebbar, während ihre Kolbenstange 2 in diesem Führungsrohr 3 axial im wesentlichen festgelegt ist. Derartige aus einer Gasfeder 1 und einem Führungsrohr 3 gebildete Hubvorrichtungen insbesondere für Stühle, aber auch für Tische und dgl. sind ebenfalls allgemein bekannt, beispielsweise aus der DE-A-19 31 012.

Die Kolbenstange 2 weist an ihrem freien Ende einen Abschnitt 5 auf, dessen Durchmesser d kleiner ist als der Durchmesser D der Kolbenstange 2. Hierdurch wird am Übergang von der Kolbenstange 2 zum Abschnitt 5 ein Bund 6 gebildet.

Auf dem Abschnitt 5 ist ein Axial-Wälzlager 7, und zwar ein Axial-Kugellager, angeordnet. Dieses weist eine obere Scheibe 8 auf, die axial gegen den Bund 6 anliegt und hierdurch festgelegt ist. Gegen diese obere Scheibe 8 liegt ein Kugelkäfig 9 an, an den sich wieder eine untere Scheibe 10 anschließt. Diese untere Scheibe 10 stützt sich auf einer Bodenplatte 11 des Führungsrohres 3 ab. In der Bodenplatte 11 ist koaxial zur Achse 4 eine Öffnung 12 ausgebildet, deren Durchmesser größer ist als der Durchmesser D der Kolbenstange 2. Der Abschnitt 5 ist durch diese Öffnung hindurchgesteckt und auf der dem Wälzlager 7 abgewandten unteren Seite der Bodenplatte 11 mittels einer Beilagscheibe 13 und einer Sicherung 14 gehalten. Die Kolbenstange 2 der Gasfeder 1 ist somit axial unverschiebbar gegenüber dem Führungsrohr 3 festgelegt. Die beiden Scheiben 8,10 weisen jeweils eine Mittelöffnung 15 bzw. 16 auf, deren Durchmesser identisch ist und etwa dem Durchmesser d des Abschnittes 5 entspricht. Hierdurch bedingt ist die obere Scheibe 8, die an dem Bund 6 anliegt, nahezu spielfrei auf dem Abschnitt 5 angeordnet. Im Bereich der an der Bodenplatte 11 anliegenden unteren Scheibe 10 weist der Abschnitt 5 eine Einschnürung 17 auf, deren Durchmesser di kleiner ist als der Durchmesser d des Abschnittes 5. Diese Einschnürung 17 erstreckt sich in Richtung der Achse 4 um die gesamte axiale Erstreckung der unteren Scheibe 10 und noch geringfügig darüber hinaus. Die Einschnürung 17 geht hier über eine Schulter 18 wieder in den dem freien Ende der Kolbenstange 2 zugeordneten Teil des Abschnittes 5 über. Auf dieser Schulter 18 ist ein Sicherungsring 19 aus Gummi, Kunststoff oder auch aus Metall angeordnet, der gegen die zugewandte Seite der unteren Scheibe 10 anliegt. Der Außendurchmesser dieses Sicherungsringes 19 ist kleiner als der Durchmesser der Öffnung 12 der Bodenplatte 11. Mit diesem Sicherungsring 19 ist das Axial-Wälzlager 7 auf der Kolbenstange 2 vormontiert und geht somit bei der Montage der Gasfeder 1 im Führungsrohr 3 nicht verloren. Vielmehr braucht das freie Ende des Abschnittes 5 nur durch die Öffnung 12 geschoben werden und die Beilagscheibe 13 und die Sicherung 14 aufgesetzt zu werden, um die Montage von Gasfeder 1 und Führungsrohr 3 zu vollenden.

## Patentansprüche

1. Längenverstellbare Gasfeder für eine Hubvorrichtung für Stühle, Tische od.dgl., welche ein Führungsrohr (3) für die Gasfeder (1) aufweist, wobei das Führungsrohr (3) eine Bodenplatte (11) mit einer Öffnung (12) aufweist, wobei die Kolbenstange (2) der Gasfeder einen Abschnitt (5) aufweist, auf dem ein eine obere Scheibe (8) und eine untere Scheibe (10) aufweisendes Axial-Wälzlager (7) angeordnet ist, wovon die mit einer Mittelöffnung (15) auf dem Abschnitt (5) befindliche obere Scheibe (8) gegen einen Bund (6) der Kolbenstange (2) anliegt und die ebenfalls mit einer Mittelöffnung (16) auf dem Abschnitt (5) angeordnete untere Scheibe (10) gegen die Bodenplatte (11) anlegbar ist, wobei der Abschnitt (5) durch die Öffnung (12) der Bodenplatte (11) hindurchschiebbar und auf deren dem Axial-Wälzlager (7) abgewandten Seite mittels einer Sicherung (14) axial festlegbar ist und wobei der Durchmesser der Öffnung (12) größer ist als der Durchmesser (d) des Abschnittes (5) in diesem Bereich, dadurch gekennzeichnet, daß der Abschnitt (5) der Kolbenstange (2) im Bereich der an die Bodenplatte (11) anlegbaren unteren Scheibe (10) mit einer Einschnürung (17) versehen ist und daß die Mittelöffnungen (15,16) der Scheiben (8,10) gleichen Durchmesser haben.

2. Gasfeder nach Anspruch 1, dadurch gekennzeichnet, daß die Einschnürung (17) sich in Richtung zum freien Ende des Abschnittes (5) über die untere Scheibe (10) erstreckt und dort eine Schulter (18) aufweist und daß auf der Schulter (18) ein das Axial-Wälzlager (7) axial gegen den Bund (6) haltender Sicherungsring (19) angeordnet ist.

3. Gasfeder nach Anspruch 2, dadurch gekennzeichnet, daß der Sicherungsring aus Gummi, elastischem Kunststoff oder Metall besteht.

4. Gasfeder nach Anspruch 2, dadurch gekennzeichnet, daß der Außendurchmesser des Sicherungsrings (19) kleiner ist als der Durchmesser der Öffnung (12) der Bodenplatte (11).

5. Hubvorrichtung für Stühle, Tische od.dgl. mit einer längenverstellbaren Gasfeder nach einem der Ansprüche 1 bis 4, und mit einem Führungsrohr (3) für die Gasfeder (1), wobei das Führungsrohr (3) eine Bodenplatte (11) mit einer Öffnung (12)) aufweist, wobei die Kolbenstange (2) der Gasfeder einen Abschnitt (5) aufweist, auf dem ein eine obere Scheibe (8) und eine untere Scheibe (10) aufweisendes Axial-Wälzlager (7) angeordnet ist, wovon die mit einer Mittelöffnung (15) auf dem Abschnitt (5) befindliche obere Scheibe (8) gegen einen Bund (6) der Kolbenstange (2) und die ebenfalls mit einer Mittelöffnung (16) auf dem Abschnitt (5) angeordnete untere Scheibe (10) gegen die Bodenplatte (11) anliegt, wobei der Abschnitt (5) durch die Öffnung (12) der Bodenplatte (11) hindurchgeschoben und auf deren dem Axial-Wälzlager (7) abgewandten Seite mittels einer Sicherung (14) axial festgelegt ist und wobei der Durchmesser der Öffnung (12) größer ist als der Durchmesser (d) des Abschnittes (5) in diesem Bereich, dadurch gekennzeichnet, daß der Abschnitt (5) der Kolbenstange (2) im Bereich der an die Bodenplatte (11) anliegenden unteren Scheibe (10) mit einer Einschnürung (17) versehen ist und daß die Mittelöffnungen (15,16) der Scheiben (8,10) gleichen Durchmesser haben.

6. Hubvorrichtung nach Anspruch 5, dadurch gekennzeichnet, daß die Einschnürung (17) sich in Richtung zum freien Ende des Abschnittes (5) über die untere Scheibe (10) erstreckt und dort eine Schulter (18) aufweist und daß auf der Schulter (18) ein das Axial-Wälzlager (7) axial gegen den Bund (6) haltender Sicherungsring (19) angeordnet ist.

7. Hubovrrichtung nach Anspruch 6, dadurch gekennzeichnet, daß der Sicherungsring aus Gummi, elastischem Kunststoff oder Metall besteht.

8. Hubvorrichtung nach Anspruch 5, dadurch gekennzeichnet, daß der Außendurchmesser des Sicherungsrings (19) kleiner ist als der Durchmesser der Öffnung (12) der Bodenplatte (11).

## Claims

1. Longitudinally adjustable gas spring for an elevating mechanism for chairs, tables or the like, having a guide tube (3) for the gas spring (1), the guide tube (3) having a bottom plate (11) with an opening (12), the piston rod (2) of the gas spring having a section (5) on which an axial rolling bearing (7) is arranged having an upper disk (8) and a lower disk (10), of which the upper disk (8) located on the section (5) with a center opening (15) bears against a collar (6) of the piston rod (2) and of which the lower disk (10) arranged with a center opening (16) on the section (5) can be put against the bottom plate (11), the section (5) being such that it can penetrate through the opening (12) of the bottom plate (11) and can be axially arrested on the latter's side facing away from the axial rolling bearing (7) by means of a locking device (14), and the diameter of the opening (12) being greater than the diameter (d) of the section (5) in this area, characterized in that the section (5) of the piston rod (2) in the vicinity of the lower disk (10) to be put against the bottom plate (11) is provided with a necking (17), and in that the center openings (15, 16) of the disks (8, 10) have the same diameter.

2. Gas spring according to claim 1, characterized in that the necking (17) extends in the direction towards the free end of the section (5) beyond the lower disk (10), where the necking (17) has a shoulder (18), and in that a retaining ring (19) axially arresting the axial rolling bearing (7) to bear against the collar (6) is arranged on the shoulder (18).

3. Gas spring according to claim 2, characterized in that the retaining ring consists of rubber, elastic plastics or metal.

4. Gas spring according to claim 2, characterized in that the outside diameter of the retaining ring (19) is smaller than the diameter of the opening (12) of the bottom plate (11).

5. Elevating mechanism for chairs, tables or the like, with a longitudinally adjustable gas spring according to one of the claims 1 to 4, and with a guide tube (3) for the gas spring (1), the guide tube (3) having a bottom plate (11) with an opening (12), the piston rod (2) of the gas spring having a section (5), on which an axial rolling bearing (7) is arranged having an upper disk (8) and a lower disk (10), of which the upper disk (8) located on the section (5) with a center opening (15) bears against a collar (6) of the piston rod (2) and of which the lower disk (10) arranged with a center opening (16) on the section (5) bears against the bottom plate (11), the section (5) penetrating through the opening (12) of the bottom plate (11) and being axially arrested on the latter's side facing away from the axial rolling bearing (7) by means of a locking device (14), and the diameter of the opening (12) being greater than the diameter (d) of the section (5) in this area, characterized in that the section (5) of the piston rod (2) is provided with a necking (17) in the vicinity of the lower disk (10) bearing against the bottom plate (11), and in that the center openings (15, 16) of the disks (8, 10) have the same diameter.

6. Elevating mechanism according to claim 5, characterized in that the necking (17) extends in the direction towards the free end of the section (5) beyond the lower disk (10), where the necking (17) has a shoulder (18), and in that a retaining ring (19) axially arresting the axial rolling bearing (7) to bear against the collar (6) is arranged on the shoulder (18).

7. Elevating mechanism according to claim 6, characterized in that the retaining ring consists of rubber, elastic plastics or metal.

8. Elevating mechanism according to claim 5, characterized in that the outside diameter of the retaining ring (19) is smaller than the diameter of the opening (12) of the bottom plate (11).

## Revendications

1. Ressort à gaz de longueur réglable destiné à un dispositif de levage pour chaises, tables ou analogues, ledit dispositif de levage comportant un tube de guidage (3) pour le ressort à gaz (1), le tube de guidage (3) comportant une plaque de fond (11) pourvue d'une ouverture (12), la tige formant piston (2) du ressort à gaz comportant une partie resserrée (5) sur laquelle est monté un roulement axial (7) comprenant un disque supérieur (8) et un disque inférieur (10), parmi lesquels le disque supérieur (8) monté sur la partie resserrée (5) au moyen d'une ouverture centrale (15) est appliqué contre un collet (6) de la tige formant piston (2) et le disque inférieur (10) également monté sur la partie resserrée (5) au moyen d'une ouverture centrale (16) peut être appliqué contre la plaque de fond (11), la partie resserrée (5) pouvant traverser l'ouverture (12) de la plaque de fond (11) et pouvant être immobilisée axialement contre le côté de celle-ci opposé au roulement axial (7) à l'aide d'un moyen de blocage (14), le diamètre de l'ouverture (12) étant supérieur au diamètre (d) de la partie resserrée (5) dans cette zone, caractérisé en ce que la partie resserrée (5) de la tige formant piston (2) présente un rétrécissement (17) dans la zone du disque inférieur (10) pouvant être appliqué contre la plaque de fond (11), et en ce que les ouvertures centrales (15, 16) des disques (8, 10) sont de même diamètre.

2. Ressort à gaz selon la revendication 1, caractérisé en ce que le rétrécissement (17) s'étend en direction de l'extrémité libre de la partie resserrée (5) au-delà du disque inférieur (10) et comporte, à cet endroit, un épaulement (18) et en ce que sur l'épaulement (18) est disposé un anneau d'arrêt (19) qui maintient le roulement axial (7) axialement contre le collet (6).

3. Ressort à gaz selon la revendication 2, caractérisé en ce que l'anneau d'arrêt est en caoutchouc, en matière plastique élastique ou en métal.

4. Ressort à gaz selon la revendication 2, caractérisé en ce que le diamètre extérieur de l'anneau d'arrêt (19) est inférieur au diamètre de l'ouverture (12) de la plaque de fond (11).

5. Dispositif de levage pour chaises, tables ou analogues, comportant un ressort à gaz de longueur réglable conforme à l'une des revendications 1 à 4 et comprenant un tube de guidage (3) pour le ressort à gaz (1), le tube de guidage (3) comportant une plaque de fond (11) pourvue d'une ouverture (12), la tige formant piston (2) du ressort à gaz comportant une partie resserrée (5) sur laquelle est monté un roulement axial (7) comprenant un disque supérieur (8) et un disque inférieur (10), parmi lesquels le disque supérieur (8) monté sur la partie resserrée (5) au moyen d'une ouverture centrale (15) est appliqué contre un collet (6) de la tige formant piston (2) et le disque inférieur (10) également monté sur la partie resserrée (5) au moyen d'une ouverture centrale (16) est appliqué contre la plaque de fond (11), la partie resserrée (5) traversant l'ouverture (12) de la plaque de fond (11) et étant immobilisée axialement contre le côté de celle-ci opposé au roulement axial (7) à l'aide d'un moyen de blocage (14), le diamètre de l'ouverture (12) étant supérieur au diamètre (d) de la partie resserrée (5) dans cette zone, caractérisé en ce que la partie resserrée (5) de la tige formant piston (2) présente un rétrécissement (17) dans la zone du disque inférieur (10) appliqué contre la plaque de fond (11), et en ce que les ouvertures centrales (15, 16) des disques (8, 10) sont de même diamètre.

6. Dispositif de levage selon la revendication 5, caractérisé en ce que le rétrécissement (17) s'étend en direction de l'extrémité libre de la partie resserrée (5) au-delà du disque inférieur (10) et comporte, à cet endroit, un épaulement (18) et en ce que sur l'épaulement (18) est disposé un anneau d'arrêt (19) qui maintient le roulement axial (7) axialement contre le collet (6).

7. Dispositif de levage selon la revendication 6, caractérisé en ce que l'anneau d'arrêt est en caoutchouc, en matière plastique élastique ou en métal.

8. Dispositif de levage selon la revendication 5, caractérisé en ce que le diamètre extérieur de l'anneau. d'arrêt (19) est inférieur au diamètre de l'ouverture (12) de la plaque de fond (11).
